(19) Europäisches Patentamt
European Patent Office
Office européen des brevets

(11) Publication number: 0 112 725 B1

(12) **EUROPEAN PATENT SPECIFICATION**

(45) Date of publication of patent specification: 13.04.88

(51) Int. Cl.$^4$: C 08 G 75/23, C 08 G 65/48

(21) Application number: 83307903.1

(22) Date of filing: 22.12.83

(54) **Chlorosulphonated polysulphones and polysulphone sulphonamides.**

(30) Priority: 27.12.82 US 453163

(43) Date of publication of application: 04.07.84 Bulletin 84/27

(45) Publication of the grant of the patent: 13.04.88 Bulletin 88/15

(84) Designated Contracting States: AT BE CH DE FR GB IT LI LU NL SE

(56) References cited:
GB-A-2 090 843

CHEMICAL ABSTRACTS, vol. 92, 1980, page 64, no. 23694t, Columbus, Ohio, USA PEKING INSTITUTE OF ENVIRONMENTAL CHEMISTRY: "A new reverse osmosis membrane-manufacture of sulfonated polysulfone"

(73) Proprietor: ALBANY INTERNATIONAL CORP.
1 Sage Road
Menards New York 12201 (US)

(72) Inventor: Coplan, Myron J.
47 Spleen Street
Natick, MA 01760 (US)
Inventor: Park, Chunghi H.
745 Mountain Street
Sharon, MA 02067 (US)
Inventor: Williams, Samuel C.
14 Grapevine Avenue
Lexington, MA 02173 (US)

(74) Representative: Perry, Robert Edward et al
GILL JENNINGS & EVERY 53-64 Chancery Lane
London WC2A 1HN (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 112 725 B1

Courier Press, Leamington Spa, England.

**Description**

This invention relates to chlorosulphonated polysulphones and polysulphone sulphonamides.

Polysulphone resins are widely regarded as among the most chemically and thermally-stable thermoplastic synthetic polymers. Sulphonated polysulphones are widely used; examples are given in US—A—3709841 and US—A—4273903. For the purposes of this specification at least, polysulphones are aromatic, their structure comprising a linear chain including phenylene radicals joined by linking groups including a substantial number of $—SO_2—$ groups. In particular, polysulphones comprise recurring units of the formula

$$—O—Ph—SO_2—Ph— \qquad (I)$$

wherein Ph is 1,4-phenylene. For example, polysulphones may comprise recurring units of the formula

$$—O—Ph—C(CH_3)_2—Ph—O—Ph—SO_2—Ph— \qquad (II)$$

wherein Ph is as defined above. Polysulphones of this type are condensation products of bisphenol A and 4,4′-bis(dichlorophenyl)sulphone and are commercially available. In addition to the isopropylidene, oxygen and sulphone linking groups shown in formula II, a wide variety of other linking groups and linking group combinations may be present in the polymer, but in general at least half of the sequences of linking groups will repeat in regular fashion, determined by the specific monomers or low molecular weight oligomers used in the condensation process.

A chlorosulphonated polysulphone according to the present invention has recurring units of the formula

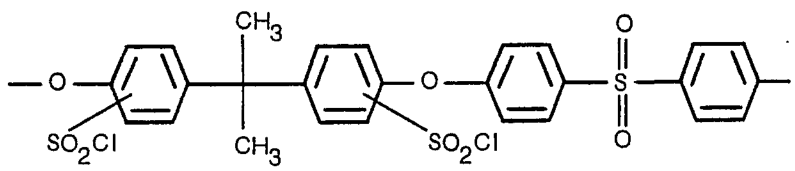

A polysulphone sulphonamide according to the present invention is the corresponding compound, obtained by reacting a chlorosulphonated polysulphone of the invention with ammonia or an amine. A quaternised sulphonamide may be prepared by reacting a polysulphone sulphonamide of the invention with an alkyl halide.

A chlorosulphonated polysulphone of the invention may be prepared from a polysulphone of formula II. The number of sulphone linking groups relative to all others is generally no more than 1:1, preferably no more than 1:2 and more preferably no more than 1:3 (as in formula II).

In a first step for preparing a chlorosulphonated polysulphone of the invention, a polysulphone of formula II is subjected to a conventional sulphonation procedure, e.g. as described in US—A—3709841, US—A—4273903 or GB—A—1350342. In general, the sulphonation may be conducted by simple admixture of a solution or suspension of the polysulphone with a sulphonating agent such as sulphur trioxide or chlorosulphonic acid. Preferably, the sulphonating agent is used in an amount such that the ratio of the total number of sulphur atoms provided by the sulphonating agent to the number of sulphur atoms (i.e. the number of recurring units of formula II) in the polymer is between 0.4:1 and 5:1. The temperature at which sulphonation is conducted is advantageously from −50° to 80°C, and preferably from −10° to 25°C. When the desired degree of sulphonation has been reached, the product may be separated from the reaction mixture by conventional techniques such as filtration, washing and drying.

By way of example, a polysulphone of formula II may be reacted with sulphur trioxide to form a sulphonated polysulphone having recurring units of the formula

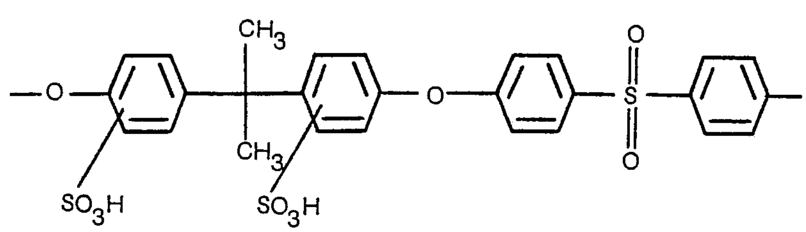

Substitution at the given positions theoretically occurs first, but it will be understood that sulphonation at other positions is possible. In general, the sulphonated polymer will be obtained as a precipitate collected from the sulphonation process and subsequently worked up by successive washings, generally with simple fluid non-solvents for the sulphonated polysulphone. It is necessary to free the sulphonated polymer of any residual sulphonating agent or by-products of sulphonation, the most common of which is dilute sulphuric acid. After successive washings and collection by, for example, centrifugation or filtration, the sulphonated

polymer must be free of washing fluid before the subsequent chlorination can be performed. If water is used, it should be noted that simple oven drying of filtered sulphonated polymers is rarely effective in completely eliminating water, inasmuch as the hydroxysulphonyl substituents are very hydroscopic and tend to bind up to 3 or 4 molecules of water each. Drying under fairly high vacuum and relatively high temperatures (in excess of 100 C) for prolonged periods of time is therefore preferred. Alternative methods of drying may be utilised, such as by exposing samples to thionyl chloride while suspended in an inert solvent; thionyl chloride is capable of extracting water by reaction, eliminating HCl and $SO_2$. The drying method should not itself introduce complicating side-reactions, such as cross-linking by reaction of hydroxysulphonyl groups and available abstractable hydrogens on adjacent polymer molecules.

A chlorosulphonated polysulphone of the invention may be prepared by reacting the corresponding sulphonated polysulphone (when thoroughly dry) with a chlorinating agent such as thionyl chloride, oxalyl chloride, phosphorus trichloride or, preferably, phosphorus pentachloride. Preferably, the chlorination is conducted in dry dichloroethane under an atmosphere of dry nitrogen, with continuous agitation. The chlorinating agent is used in an amount stoichiometrically in excess of the available hydroxysulphonyl sites on the sulphonated polysulphone. The chlorination is preferably conducted at from 35°C to reflux. On completion of the reaction (which may be observed by disappearance of the sulphonated polysulphone), the chlorosulphated polysulphone may be separated from the reaction mixture by conventional methods, e.g. removal of the solvent by distillation. The product may be purified, if desired.

Purification is unnecessary, if the chlorosulphonated polysulphone is required for conversion to the corresponding sulphonamide. The conversion is achieved by reaction with ammonia or any of a wide range of amine reagents, e.g. with $C_{1-4}$ primary and secondary aliphatic amines (e.g. methylamine, ethylamine, propylamine, isopropylamine, butylamine or dimethylamine) to give the corresponding N-substituted-sulphonamides; with $C_{2-6}$ primary and secondary aminoalcohols (e.g. ethanolamine, diethanolamine, 2-aminobutanol or hexanolamine) to give the corresponding N-hydroxyalkyl sulphonamides; with N,N-dialkyl $C_{2-6}$ alkanediamines (e.g. N,N-dimethylethanediamine or N,N-dimethyl-1,3-propanediamine) to give the corresponding N,N-dialkylaminoalkyl sulphonamides; with arylamines (e.g. aniline or N-methylaniline) to give the corresponding N-aryl-substituted-sulphonamides; or with heterocyclic amines (e.g. a C-aminopyridine such as 2-aminopyridine) to give the corresponding N-heterocyclic group-substituted-sulphonamides.

In preparing the sulphonamides, stoichiometric proportions of the reagents may be employed, although an excess of the amine reactant is preferred. The reaction proceeds over a wide range of temperatures, preferably from about room temperature to 100°C. The sulphonamide may be separated from the reaction mixture by conventional techniques of distillation, filtering and washing. The anionic (sulphonamide) sites may also be quaternised, if desired, by reaction with an alkyl halide.

By way of example, reaction of a chlorosulphonated polysulphone of the invention with N,N-dimethylpropanediamine replaces each chlorine atom by a $-NH-(CH_2)_3-N(CH_3)_2$ group. This sulphonamide may be reacted with methyl iodide to give the corresponding tetraalkylammonium iodide.

The primary utility of a chlorosulphonated polysulphone of the invention is as an intermediate in the preparation of corresponding polysulphone sulphonamides. The sulphonamides are useful as separatory membranes. In general, polysulphone derivatives can be used in the formation of membranes, coatings, ion-exchange resins and fibres, and selectively-permeable barrier films.

The following Examples illustrate the invention. The polysulphone used as a starting material has recurring units of formula II.

### Example 1

2.5 l methylene chloride were charged into a three-neck, 4 litre reaction flask fitted with a mechanical stirrer, a 1 litre addition funnel and 500 ml addition funnel with an argon inlet fitted on the top. The charge was cooled to 0—5°C with an external ice-acetone bath. 125 g (0.283 moles) of the polysulphone Udel® P3500 (Union Carbide), predried for 4 hours at 150C, were dissolved in 940 ml methylene chloride at room temperature, and the solution was transferred into the 1 mitre addition funnel. A mixture of 26 ml (0.455 moles) sulphur trioxide (stabilised Sulfan® B. Allied Chemical) and 225 ml methylene chloride was placed in the 500 ml addition funnel. The Udel® P3500 and sulphur trioxide solutions were added simultaneously over a period of one hour to the cooled and well-stirred methylene chloride charge. After the addition was completed, the resulting mixture was stirred for an additional 3 hours at 0—5°C and then brought to room temperature. The prepared sulphonated polysulphone was found to be of a high degree of substitution (IEC of 2.8 meq%/g) and was immediately subjected to rechlorination without additional work-up.

The reaction flask was fitted with a thermometer, drying tube, Dean-Stark distillation receiver and reflux condenser. 131 g (0.57 moles) phosphorus pentachloride powder and 2.5 l dichloroethane were added to the stirred suspension of sulphonated polysulphone. The suspension was warmed gradually to reflux. Residues of the low boiling methylene chloride were removed and the temperature gradually raised to about 83°C (reflux temperature of 1,2-dichloroethane). After three days of refluxing, the suspension cleared and formed a brown viscous solution. The solution was filtered through glass wool to remove gel particles and the filtrate was placed into a three-neck, 4 litre reaction flask. The volume was then reduced to approximately 1.5 l by distilling off surplus dichloroethane. The polymeric mass was poured into an ice-chilled isopropyl alcohol bath, the precipitant (taffy-like) was collected, rinsed with isopropyl alcohol and

redissolved in methylene chloride. The solvent was then evaporated at room temperature. The sticky product was poured into an ice water-isopropyl alcohol mixture (3:1) and broken up in a blender, the precipitate filtered and washed with water until the filtrate was neutral. The polysulphone sulphonyl chloride product was then dried in a vacuum oven at 40°C (1.33 Pa) ($10^{-2}$ torr) to a constant weight. Analysis of the reaction product revealed that the polymer contained 3.4 meq/g of $SO_2Cl$ groups (chlorine content of the material was 12.2%).

Example 2

140 g (0.22 moles) of the polysulphone sulphonyl chloride prepared as in Example 1 was dissolved in 1.5 l methylene chloride. The solution was cooled to 5°C and 88 g N,N-dimethyl-1,3-propanediamine dissolved in 500 cc methylene chloride were added slowly to the solution, with vigorous stirring. The resulting clear brown solution was stirred for an additional two hours and solvent distilled off to a volume of approximately 1 l. The product was precipitated in acetone. The sludge precipitate was broken up with an ice water-acetone mixture in a blender and filtered. The filtered product was washed with deionised water to neutral pH and dried in a vacuum oven at 40°C (1.33 Pa) ($10^{-2}$ torr) to a constant weight. The nitrogen content of the thus-prepared weakly anionic sulphonamide derivative of a polysulphone was 6.9% (theoretical 7.2%) and the measured anion exchange capacity 2.1 meq/g.

Example 3

58 g (0.075 moles) of the polysulphone sulphonamide prepared as described in Example 2 were dissolved in 600 ml methylene chloride and the solution, kept under an argon blanket, was cooled to 5°C. 10 $cm^3$ (0.156 moles) methyl iodide dissolved in 100 $cm^3$ methylene chloride were added slowly to the vigorously stirred solution over a 30 minute period. The coolant was then removed and the reaction mixture stirred at room temperature for an additional 2 hours. The precipitate (which had already formed during the addition of methyl iodide) was isolated, washed with methylene chloride, broken up in a blender with an acetone-ice water mixture, filtered and washed with deionised water. The quaternised sulphonamide derivative of the polysulphone was dried in a vacuum over (1.33 Pa ($10^{-2}$ torr), 50°C) to a constant weight. The nitrogen content of this sulphonamide derivative of polysulphone with strong anion-exchange sites was 5.4% (theoretical 5.3%) and the anion-exchange capacity 3.5 meq/g.

Example 4

250 g (0.566 moles) Udel® P3500 were dried for 4 hours at 150°C and then dissolved in 2.5 l methylene chloride (Dow reagent grade). 56 $cm^3$ (0.849 moles) chlorosulphonic acid (Kodak reagent grade) dissolved in 504 $cm^3$ methylene chloride were added slowly over 90 minutes to the vigorously-stirred polymer solution (kept at a temperature of 0—5°C). After the addition was completed, the coolant was removed and the reaction mixture stirred for an additional 120 minutes, while allowing the temperature to rise gradually to room temperature. After the 120 minutes had elapsed, the reaction was terminated, the top methylene chloride layer decanted and the precipitate washed twice with fresh methylene chloride. The product was then dissolved in 1.1 l isopropyl alcohol/water (90/10 by volume), to obtain a golden yellow solution. The solution was rotary-evaporated to dryness and finally dried in a vacuum oven to a constant weight (1.33 Pa $10^{-2}$ torr), 40°C). The ion-exchange capacity of the sulphonated polysulphone was found to be 1.9 meq/g.

100 g of the sulphonated polysulphone were suspended in 1.5 l 1,2-dichloroethane. 5 $cm^3$ thionyl chloride were added to the vogorously-stirred reaction mixture. The thionyl chloride reacted violently with residual water. 105 g (0.46 moles) phosphorus pentachloride powder were then added to the reaction mixture, and the temperature raised to reflux. After four days of refluxing, the suspension cleared and formed a brown viscous solution. The product was worked up as described in Example 1, to yield a chlorosulphonated polysulphone with a chlorine content of 6.4%.

Example 5

15 g of the chlorosulphonated polysulphone prepared in Example 4 were dissolved in 100 $cm^3$ methylene chloride. The solution was cast on a glass plate and drawn down to a thickness of 0.1 mm with a Gardner knife. The solvent was swept with a stream of dry nitrogen and the film was finely dried at 100°C for 30 minutes. The film of chlorosulphonated polysulphone was then immersed in a solution of 5 $cm^3$ 1,6-hexanediamine and 25 $cm^3$ N,N-dimethyl-1,3-propanediamine in 200 $cm^3$ dry ethyl ether, for 4 hours. The cross-linked film of polysulphone sulphonamide was washed with methanol and the weak anionic sites quaternised by immersing the film in a 10% solution of methyl iodide in methanol. The anion exchange capacity of the prepared membrane was 1.1 meq/g and the electrical resistance 28 ohm/$cm^2$ (measured in 1.0 N KCl solution at 25°C). The perm-selectivity of the membrane estimated from the membrane potential measured between the 0.1 N and 1.0 N KCl solutions was 95%.

**Claims for the Contracting States: BE CH DE FR GB IT LI LU NL SE**

1. A chlorosulphonated polysulphone having recurring units of the formula

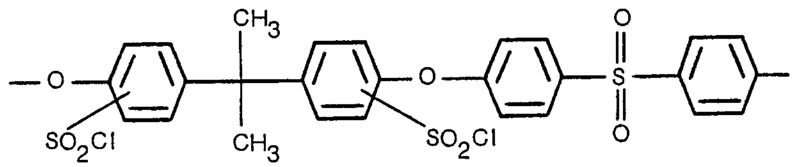

2. A polysulphone sulphonamide having recurring units of the formula defined in claim 1, in which the Cl atoms are replaced by $NH_2$ or mono- or di-substituted amino groups.

3. A quaternised polysulphone sulphonamide which is a polysulphone sulphonamide according to claim 2 quaternised with an alkyl halide.

**Claims for the Contracting State: AT**

1. A process for preparing a chlorosulphonated polysulphone having recurring units of the formula

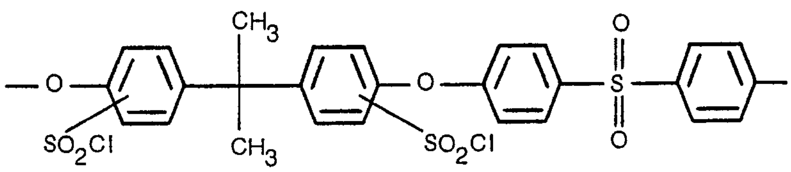

which comprises reacting a sulphonated polysulphone having recurring units of the formula

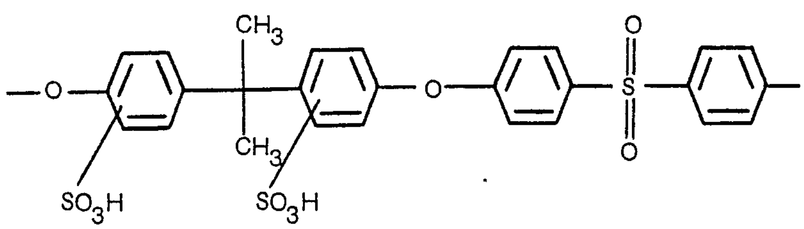

with a chlorinating agent.

2. A process according to claim 1, wherein the chlorinated polysulphone has between 0.4 and 5 sulphur atoms in the groups $-SO_2Cl$ per sulphur atom in the linking groups $-SO_2-$.

3. A process for preparing a polysulphone sulphonamide having recurring units of the formula

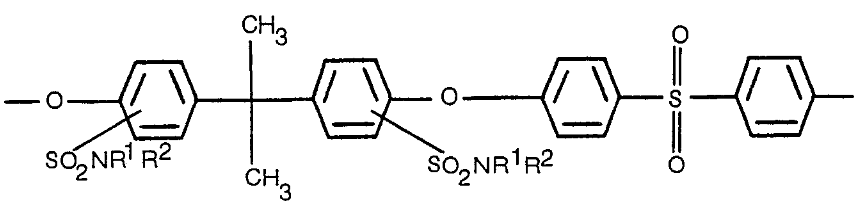

wherein $R^1$ and $R^2$ are each either H or a substituent, which comprises reacting a chlorosulphonated polysulphone as defined in claim 1 or claim 2 with ammonia or a primary or secondary amine.

4. A process for preparing a quaternised polysulphone sulphonamide, which comprises reacting a polysulphone sulphonamide as defined in claim 3 with an alkyl halide.

**Patentansprüche für die Vertragsstaaten: BE CH DE FR GB IT LI LU NL SE**

1. Chlorsulfoniertes Polysulfon mit wiederkehrenden Einheiten der Formel

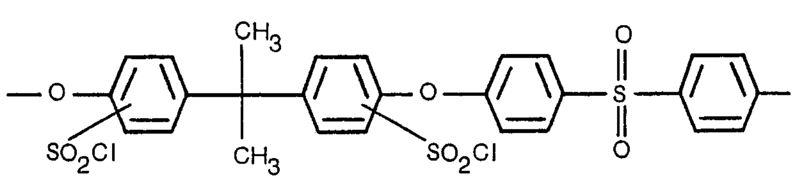

2. Polysulfonsulfonamid mit wiederkehrenden Einheiten der in Anspruch 1 definierten Formel, worin die Chloratome durch $NH_2$ oder mono- oder di-substituierte Aminogruppen ersetzt sind.

3. Quaternisiertes Polysulfonsulfonamid, welches ein Polysulfonsulfonamid gemäß Anspruch 2, quaternisiert mit einem Alkylhalogenid, ist.

**Patentansprüche für den Vertragsstaat: AT**

1. Verfahren zur Herstellung eines chlorsulfonierten Polysulfons mit wiederkehrenden Einheiten der Formel

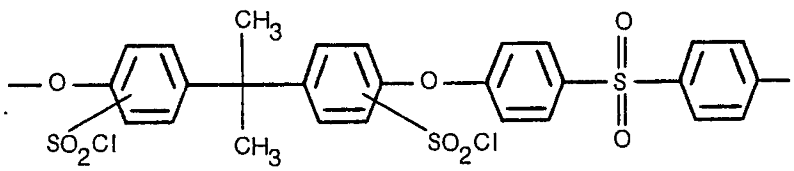

welches ein Umsetzen eines sulfonierten Polysulfons mit wiederkehrenden Einheiten der Formel

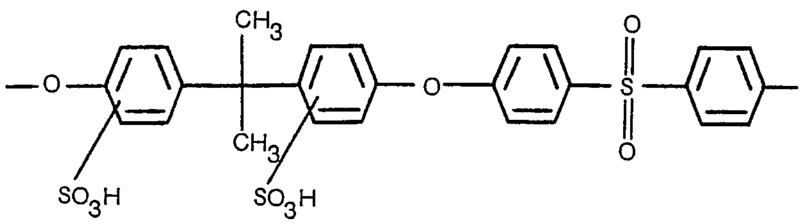

mit einem Chlorierungsmittel umfaßt.

2. Verfahren nach Anspruch 1, worin das chlorierte Polysulfon zwischen 0,4 und 5 Schwefelatomen in den $SO_4Cl$-Gruppen je Schwefelatom in den $—SO_2$-Verbindungsgruppen aufweist.

3. Verfahren zur Herstellung eines Polysulfonsulfonamids mit wiederkehrenden Einheiten der Formel

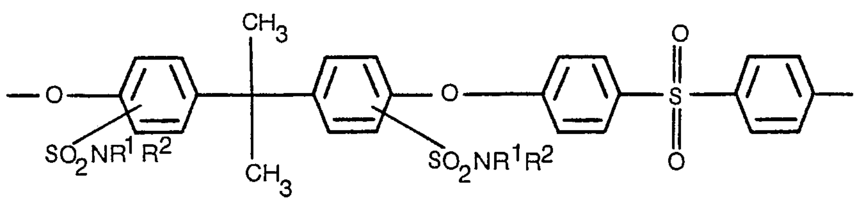

worin $R^1$ und $R^2$ entweder Wasserstoff oder einen Substuenten bedeuten, welches Verfahren ein Umsetzen eines chlorsulfonierten Polysulfons, wie in Anspruch 1 oder Anspruch 2 definiert, mit Ammoniak oder einem primären oder sekundären Amin umfaßt.

4. Verfahren zur Herstellung eines quaternisierten Polysulfonsulfonamids, welches ein Umsetzen eines Polysulfonsulfonamids, wie in Anspruch 3 definiert, mit einem Alkylhalogenid umfaßt.

**Revendications pour les Etats contractants: BE CH DE FR GB IT LI LU NL SE**

1. Polysulfone chlorosulfonée présentant des motifs récurrents de formule

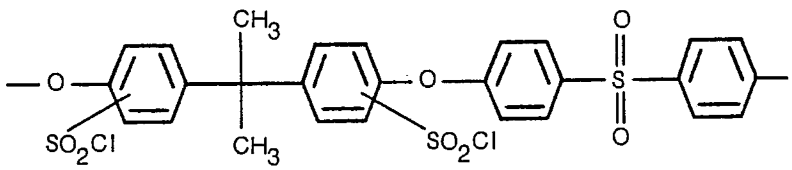

2. Polysulfone-sulfamide présentant des motifs récurrents de formule suivant la revendicaion 1, dans laquelle les atomes de chlore sont remplacés par des groupes $NH_2$ ou des groupes amino monosubstitués ou disubstitués.

3. Polysulfone-sulfamide quaternisé qui est un polysulfone-sulfamide suivant la revendication 2, quaternisé avec un halogènure d'alkyle.

**Revendications pour l'Etat contractant: AT**

1. Procédé de préparation d'une polysulfone chlorosulfonée présentant des motifs récurrents de formule

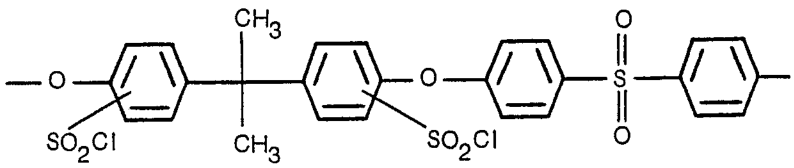

qui consiste à faire réagir une polysulfone sulfonée présentant des motifs récurrents de formule

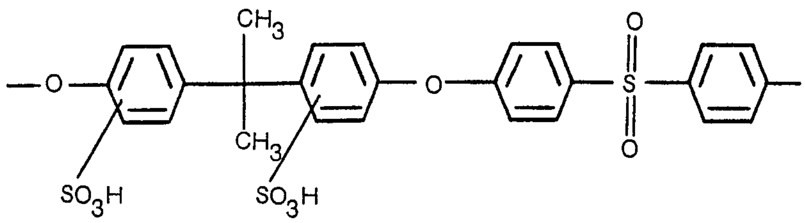

avec un agent de chloration.

2. Procédé suivant la revendication 1, dans lequel la polysulfone chlorée comprend entre 0,4 et 5 atomes de soufre dans les groupes $—SO_2Cl$ pour chaque atome de soufre dans les groupes de liaison $—SO_2—$.

3. Procédé de préparation d'un polysulfone-sulfamide portant des motifs récurrents de formule

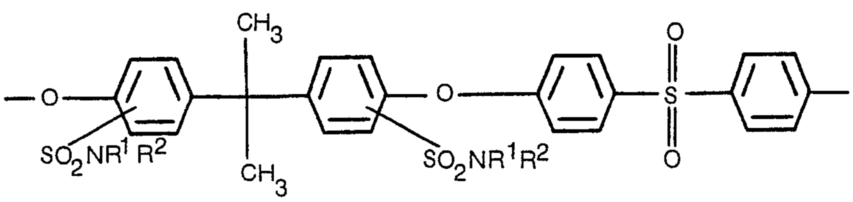

dans laquelle $R^1$ et $R^2$ représentent chacun H ou un substituant, qui consiste à faire réagir une polysulfone chlorosulfonée telle que définie dans la revendication 1 ou dans la revendication 2 avec l'ammoniac ou avec une amine primaire ou secondaire.

4. Procédé de préparation d'un polysulfone-sulfamide quaternisé, qui consiste à faire réagir un polysulfone-sulfamide tel que défini dans la revendication 3 avec un halogénure d'alkyle.